# EUROPEAN PATENT APPLICATION

(11) **EP 4 451 224 A1**
(43) Date of publication of application: **23.10.2024**
(21) Application number: 23169122.1
(22) Date of filing: 21.04.2023
(51) Int. Cl.: G06T 19/20

(54) **HEART VALVE LEAFLET MODELLING**

(71) Applicant: Koninklijke Philips N.V., 5656 AG Eindhoven (NL)
(72) Inventor: BARINK, Marco, Eindhoven (NL); LAVEZZO, Valentina, Eindhoven (NL)
(74) Representative: Philips Intellectual Property & Standards

(57) **Abstract**

Proposed concepts thus aim to provide schemes, solutions, concept, designs, methods and systems pertaining to representing a predicted length of a heart valve leaflet. This can be achieved by obtaining both a 3D model representative of the geometry of a heart valve leaflet and a predicted length of the heart valve leaflet. The 3D model can then be adapted based on the predicted length to generate an adapted 3D model representing an extension of the heart valve leaflet to the predicted length.

## Description

### FIELD OF THE INVENTION

This invention relates generally to heart valve leaflets, and in particular to the field of representing a heart valve leaflet in a model.

### BACKGROUND OF THE INVENTION

In recent years, both minimally invasive and catheter procedures to correct for structural problems in the heart have become more frequently used in clinics. For valve replacement and repair it is very important to know the length of heart valve leaflets to a high accuracy because this correlates with specific complications, e.g. the appearance of the neo LVOT (a restriction in the left ventricular outflow tract) or a suboptimal grasping of the leaflets (and a need of regrasping with a possibility of damaging or rupturing the leaflets themselves).

To guide the clinicians, an ultrasound image is also used to determine the heart valve leaflet length. However, the spatial resolution of a 2D/3D ultrasound scan is limited and small details are often not visible. Therefore, the leaflet edges/leaflet length is often not easily visible, especially when the heart valve is closed.

To enhance the visibility of structures in the heart, a segmentation is often used while planning for the intervention as well as during guidance. A valve segmentation is the annotation of the contour and volume within the scanned space, showing where the valve is at that moment in time. 3D models are often used to enclose these volumes and identify contours. When these models are followed in time, however, e.g. over the period of a heartbeat, the length of the leaflets in the models change. This is caused by the fact that it is very difficult to discern the exact end of the leaflet in models derived from 2D/3D ultrasound, especially in cases where the valve is closed.

In the systolic or closed state, the valve sometimes even appears as a 'closed' plane, instead of two separate planes which coapt for some distance in the centre of the valve. Coaptation is where both leaflets meet and create a 'seal' for some distance as both leaflets are oriented parallel and downwards. The spatial resolution of ultrasound scans with the valve in a closed condition is often insufficient to capture valve coaptation.

Leakage of a heart valve is backflow of blood through a valve which should be closed, but which does not close perfectly. In almost all cases, this problem occurs at the valve orifice. This valve orifice is made up by valve leaflet edges. Hence, it is of the utmost importance in cases of mitral valve regurgitation. However, as already mentioned, leaflet edges are almost impossible to see in 2D/3D(+t) ultrasound scans. The clinician is therefore partly blind during transcatheter heart valve procedures.

### SUMMARY OF THE INVENTION

The invention is defined by the claims.

According to examples in accordance with an aspect of the invention, there is provided a method for representing a predicted length of a heart valve leaflet.

The method comprises: obtaining a 3D model representative of the geometry of a heart valve leaflet; obtaining a predicted length of the heart valve leaflet; and adapting the 3D model based on the predicted length to generate an adapted 3D model representing an extension of the heart valve leaflet to the predicted length.

Proposed concepts thus aim to provide schemes, solutions, concept, designs, methods and systems pertaining to representing a predicted length of a heart valve leaflet. In particular, embodiments aim to provide a method in which a 3D model of a heart valve leaflet is obtained along with a predicted length of the heart valve leaflet, and the predicted length is then used to adapt the 3D model to generate an adapted 3D model representing an extension of the heart valve leaflet to the predicted length.

In other words, it is proposed that by obtaining a predicted length of a heart valve leaflet, a 3D model of a heart valve leaflet may be adapted to represent an extension of the heart valve leaflet to the predicted length. For example, the predicted length may represent the full length of the heart valve leaflet and this may be obtained by retrieving a value from a database or based on a series of frames of a 3D+t ultrasound scan of the heart valve leaflet.

By obtaining a predicted length of a heart valve leaflet, a 3D model of the leaflet which does not represent the leaflet's full length may then be adapted to represent the leaflet's full length. The extension of the heart valve leaflet in the adapted 3D model may be indicated visually in the 3D model, for instance via a transparent overlay of a different colour over the original 3D model. An improved method for representing a predicted length of a heart valve leaflet may therefore be provided by proposed concepts.

For instance, a 3D model representing the geometry of a heart valve leaflet may first be obtained. This may be based on a 3D ultrasound image of the heart valve leaflet. In the 3D ultrasound image of the heart valve leaflet, it may be difficult or impossible to discern the full length of the leaflet, especially if the valve is closed. The 3D model of the heart valve leaflet may then not represent the full length of the leaflet. A predicted length of the heart valve leaflet may then be obtained and used to adapt the 3D model to generate an adapted 3D model extending the heart valve leaflet to the predicted length. This predicted length may be based on a series of 3D models of the heart valve leaflet, each 3D model based on a frame of a 3D+t ultrasound scan of the leaflet respectively. For instance, a maximum length of the heart valve leaflet among the series of 3D models may be found and taken as the predicted length. The 3D model of the leaflet with a maximum length may relate to a frame of the 3D+t ultrasound scan in which the valve is open, i.e. in diastole, and hence the tips of the leaflet are easier to discern.

Put another way, a method is provided in which a length of a heart valve leaflet can be determined when the heart valve is in an open state, and then this information can be applied to extend a 3D model of the heart valve leaflet when the heart valve is in a closed state. This extension may be indicated via the use of a coloured overlay to distinguish the extension for the clinician whilst also allowing them to see the original 3D model.

This invention may be of particular use in the case of pre-operation 2D/3D+t ultrasound scans of heart valve leaflets. For instance, before a surgical procedure, during which the full lengths of the heart valve leaflets is useful or necessary information. The heart valve of which the heart valve leaflet is a part may comprise any heart valve.

Ultimately, an improved method for representing a predicted length of a heart valve leaflet may be supported by the proposed concept(s).

In some embodiments, obtaining a predicted length of the heart valve leaflet may comprise: determining a predicted length of the heart valve leaflet based on a series of 3D models of the heart valve leaflet, and wherein the series of 3D models of the heart valve leaflet comprises the 3D model of the heart valve leaflet. The series of 3D models of the heart valve leaflet may each relate to a frame of a 3D+t ultrasound scan of the leaflet. Based on the series of 3D models, of which the (original) 3D model being adapted is a member, a predicted length of the leaflet may be determined. This may be determined, for instance, by finding a maximum length of the leaflet in the series; by averaging a length of the leaflet in the series; by averaging lengths of leaflets above a threshold length in the series; or by averaging lengths of leaflets corresponding to open valves in the series. In other words, the 3D model being adapted may be based on a frame of a 3D+t ultrasound scan of the heart valve leaflet, and the series of 3D models may be all or a subset of the frames of the same 3D+t ultrasound scan.

In some embodiments, determining a predicted length of the heart valve leaflet based on the series of 3D models may comprise determining a maximum length of the heart valve leaflet based on the series of 3D models and taking the maximum length as the predicted length. By finding the maximum length among the series of 3D models, a length of the heart valve leaflet that is closer to or matches its full length can be found and used to adapt the 3D model of the heart valve leaflet by extending the leaflet to the determined maximum length. The maximum length of the heart valve leaflet based on the series of 3D models is likely to correspond to a 3D model representing the heart valve leaflet in an open state. This model may correspond to a frame of a 3D+t ultrasound scan of the heart valve leaflet in which the valve is open. When a heart valve is open, it is easier to see the full length of a heart valve leaflet in an ultrasound scan, and hence a 3D model generated based on a frame of the ultrasound scan in which the valve is open is likely to represent the full length of the heart valve leaflet. This maximum length can then be extracted from the series of 3D models and used to adapt the other 3D models, extending the leaflets to the determined maximum length.

In some embodiments, the predicted length of the heart valve leaflet may comprise a plurality of values describing variation of the length of the heart valve leaflet with respect to a position along a tip of the heart valve leaflet. The shape of a heart valve leaflet is not rectangular, meaning that the length of the leaflet is not constant or identical at every position along the width of the leaflet. Therefore, the predicted length may comprise a plurality of values, each value relating to a length of the heart valve leaflet at a certain position along the tip of the heart valve leaflet. In other words, a separate predicted length value may be provided for each position along a width of the heart valve leaflet or along an orifice of the 3D model. The adapted 3D model may then represent a more accurate extension of the heart valve leaflet.

In some embodiments, the extension may be indicated visually in the adapted 3D model. By indicating the extension visually, a clinician may easily be able to tell what parts of the 3D model of the heart valve leaflet represent the extension of the heart valve leaflet to the predicted length.

In some embodiments, the visual indication may be a transparent overlay over the 3D model. This may allow a clinician to more easily see a predicted extension of the heart valve leaflet whilst also being able to easily see the original 3D model.

In some embodiments, the transparent overlay may be of a different colour to the 3D model. This may further aid in allowing the clinician to more easily distinguish between the original 3D model and the extension of the leaflet in the adapted 3D model.

In some embodiments, the 3D model may be based on at least one 3D ultrasound image of the heart valve leaflet. The 3D model may be generated based on a segmentation of a 3D ultrasound image of the heart valve leaflet or based on a segmentation of a frame a 3D+t ultrasound scan of the heart valve leaflet.

In some embodiments, the method may further comprise estimating the direction of a papillary tip of the heart valve leaflet and wherein the extension of the heart valve leaflet may be in the direction of the estimated direction of the papillary tip. The valve edge is pulled in the direction of the papillary tips by chordae, and utilising this information may aid in avoiding unrealistic and self-intersecting extensions of the leaflets. As the direction of the papillary tip is physiological and can be estimated, for instance, based on the 3D model or the series of 3D models, this provides a good basis to choose the direction of the extension.

In some embodiments, the method may further comprise: obtaining a further 3D model representative of the geometry of a further heart valve leaflet; obtaining a predicted length of the further heart valve leaflet; and adapting the further 3D model based on the predicted length of the further heart valve leaflet to generate a further adapted 3D model representing an extension of the further heart valve leaflet to the predicted length of the further heart valve leaflet. Heart valves may comprise more than one leaflet and so by modelling a further heart valve leaflet(s), and adapting both (or more), a fuller picture of the heart valve may be generated and utilised by a clinician.

In some embodiments, the method may further comprise estimating the shortest line between the papillary tips of the 3D model and the further 3D model respectively, and wherein the extensions of the heart valve leaflet and the further heart valve leaflet respectively may be in the direction of the estimated shortest line. This may allow for more accurate adapted 3D models of the entire heart valve to be generated and, optionally, used for further processing.

In some embodiments, the method may further comprise determining a coaptation distance of the heart valve leaflet with the further heart valve leaflet. Coaptation is where both leaflets meet and create a seal for some distance as both leaflets are orientated parallel and downwards. The coaptation distance is very important for clinicians to know. For instance, the coaptation distance is very valuable in the case of valve leakage and especially when clinicians are planning to perform a transcatheter procedure.

In some embodiments, the 3D model is based on segmentation of 3D ultrasound scan data. 3D ultrasound scans are usually taken of heart valve leaflets prior to operations concerning them.

In some embodiments determining a predicted length of the heart valve leaflet based on a series of 3D models of the heart valve leaflet may comprise providing the series of 3D models as inputs to a first neural network, the first neural network being trained to predict, for the series of 3D models of the heart valve leaflet, a predicted length of the heart valve leaflet.

In some embodiments, there is provided a computer program comprising code means for implementing any of the methods described above when said program is run on a processing system.

According to another aspect of the invention, there is provided a system for representing a predicted length of a heart valve leaflet. The system comprising: an input interface configured to obtain a 3D model representative of the geometry of a heart valve leaflet, and obtain a predicted length of the heart valve leaflet; and a processor configured to adapt the 3D model based on the predicted length to generate an adapted 3D model representing an extension of the heart valve leaflet to the predicted length.

Thus, there may be proposed concepts for representing a predicted length of a heart valve leaflet, and this may be done based on an obtained 3D model representative of the geometry of a heart valve leaflet and an obtained predicted length of the heart valve leaflet.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a method for representing a predicted length of a heart valve leaflet according to a proposed embodiment;
Fig. 2 is a flow diagram of a method for representing a predicted length of a heart valve leaflet according to a proposed embodiment;
Fig. 3 is a flow diagram of a method for representing a predicted length of two heart valve leaflets respectively according to a proposed embodiment;
Fig. 4 is an example illustration of an adapted 3D model of a heart valve leaflet according to a proposed embodiment;
Fig. 5 is a simplified block diagram of a system for representing a predicted length of a heart valve leaflet according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to representing a predicted length of a heart valve leaflet. According to proposed concepts, a number of possible solutions may be implemented separately or jointly. That is, although these possible solutions may be described below separately, two or more of these possible solutions may be implemented in one combination or another.

Embodiments of the invention aim to provide a method for representing a predicted length of a heart valve leaflet. This can be achieved by obtaining both a 3D model representative of the geometry of a heart valve leaflet and a predicted length of the heart valve leaflet. The original 3D model can then be adapted based on the predicted length to generate an adapted 3D model representing an extension of the heart valve leaflet to the predicted length.

Proposed concepts thus aim to represent a predicted length of a heart valve leaflet in an adapted 3D model of the heart valve leaflet. This comprises obtaining a 3D model of the heart valve leaflet, obtaining a predicted length of the heart valve leaflet, and then adapting the 3D model to extend the heart valve leaflet to the predicted length. In other words, it is proposed that by obtaining a predicted length of a heart valve leaflet, a 3D model of the heart valve leaflet can be adapted to represent an extension of the heart valve leaflet to the predicted length. For example, the predicted length may represent the full length of the heart valve leaflet and this may be obtained by retrieving a value from a database or based on a series of 3D models of the heart valve leaflet of which the (original) 3D model being adapted is a member.

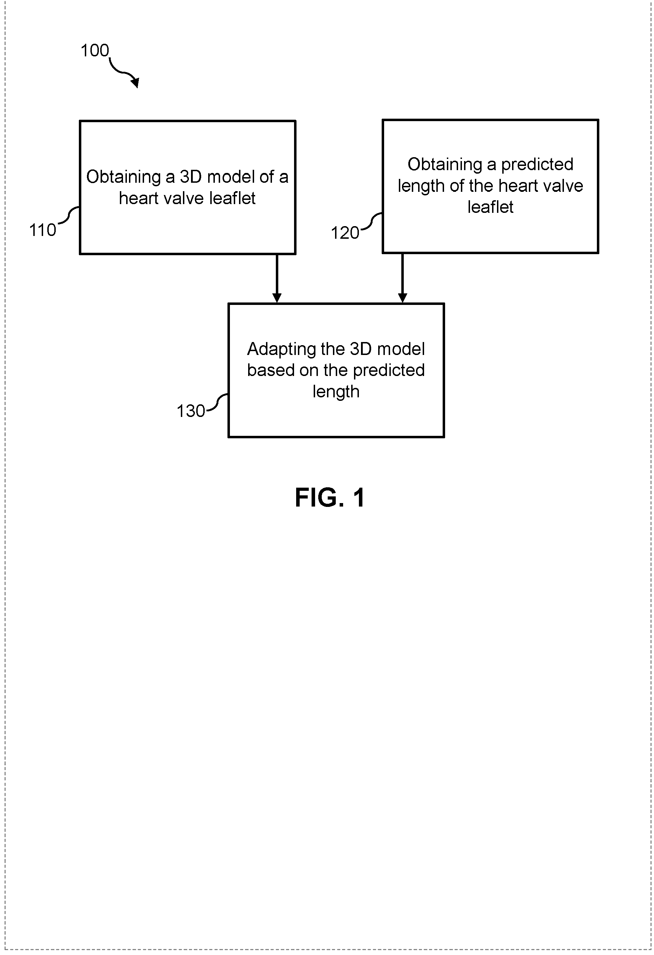

Referring now to Fig. 1, there is depicted a simplified flow diagram of a method 100 for representing a predicted length of a heart valve leaflet according to a proposed embodiment.

The method 100 begins with the step 110 of obtaining a 3D model representative of the geometry of a heart valve leaflet. In this embodiment, the 3D model is based on at least one 3D ultrasound image of the heart valve leaflet. Specifically, the 3D model is based on segmentation of the 3D ultrasound scan data. This is not essential to the method 100, however. The 3D model of the heart valve leaflet may be obtained in any suitable way. For instance, the 3D model of the heart valve leaflet may be based on CT scan data, MRI scan data, or echocardiography, etc.

In step 120, a predicted length of the heart valve leaflet is obtained. In some embodiments, the predicted length of the heart valve leaflet may comprise a plurality of values describing variation of the length of the heart valve leaflet with respect to a position along a tip of the heart valve leaflet. The shape of a heart valve leaflet is not rectangular, meaning that the length of the leaflet is not constant or identical at every position along the width of the leaflet. Therefore, the predicted length may comprise a plurality of values, each value relating to a length of the heart valve leaflet at a certain position along the tip of the heart valve leaflet. The tip referred to may be the papillary tip. In other words, a separate predicted length value may be provided for each position along a width of the heart valve leaflet or along an orifice of the 3D model. In other words, if the 3D model is made up of nodes, each node along the tip of the heart valve leaflet may correspond to one of the plurality of values, thereby allowing for an extension of varying length along the edge of the heart valve leaflet. The adapted 3D model may then represent a more accurate extension of the heart valve leaflet.

In step 130, the 3D model is adapted based on the predicted length to generate an adapted 3D model representing an extension of the heart valve leaflet to the predicted length. In this embodiment, the extension is indicated visually in the adapted 3D model. By indicating the extension visually, a clinician may easily be able to tell what parts of the 3D model of the heart valve leaflet have been extended to a predicted length. This feature is not essential, however. The extension of the heart valve leaflet may alternatively not be indicated at all, thereby allowing the extension to seamlessly visually blend with the original 3D model. In other embodiments, the extension may be indicated visually by marking the edges of the extension. In other embodiments, the extension may be indicated visually by being visualized on an x-plane, i.e. a 2D cross-section of the 3D model.

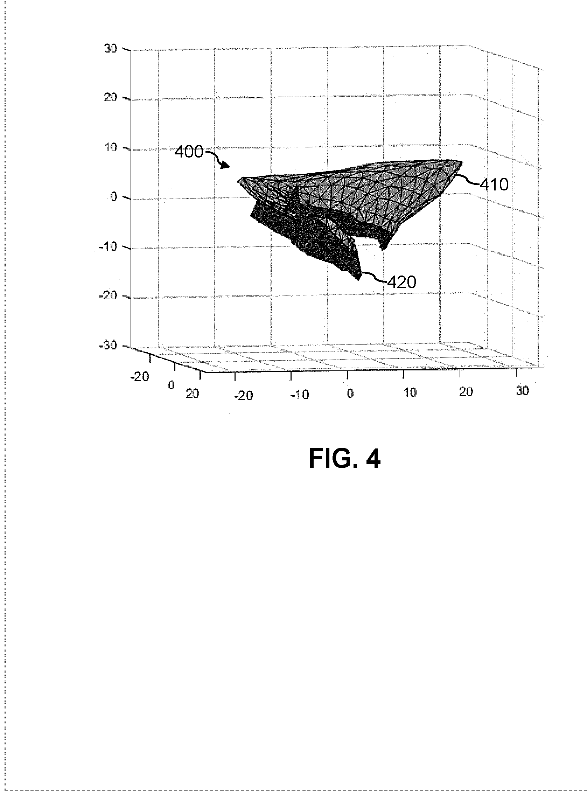

Further, in this embodiment, the visual indication is a transparent overlay of a different colour to the 3D model over the 3D model. This may allow the clinician to more easily see the predicted extension of the heart valve leaflet whilst also being able to easily see and distinguish from the original 3D model. An example of this can be seen in Fig. 4.

In some embodiments, the method 100 may further comprise generating a display control signal, the display control signal describing the adapted 3D model. In some embodiments, the method 100 may be integrated into current diagnostic visualisation systems.

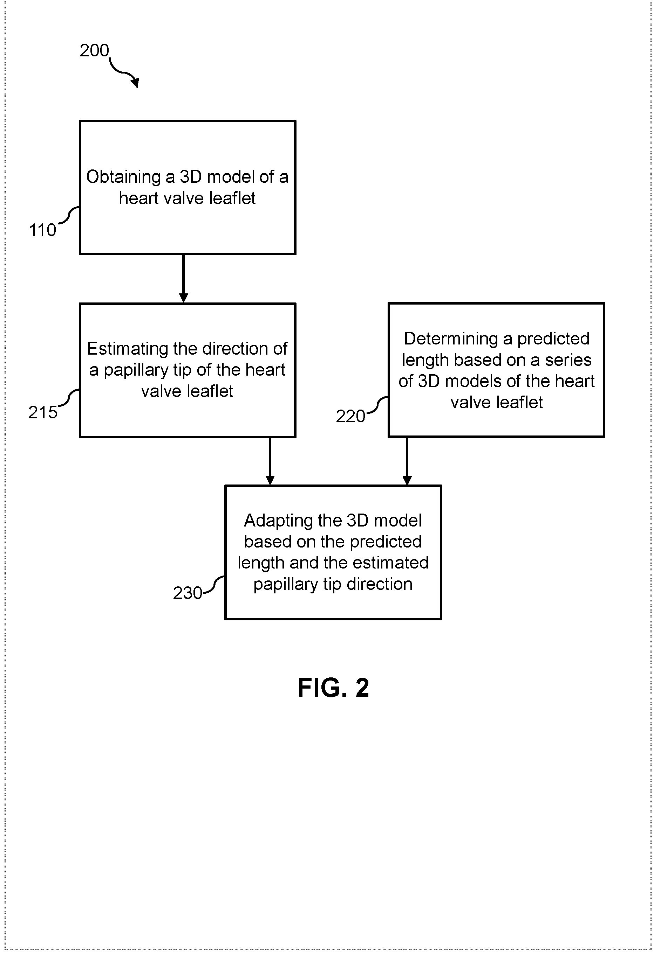

Referring now to Fig. 2, there is depicted a flow diagram of a method 200 for representing a predicted length of a heart valve leaflet according to a proposed embodiment.

Step 110 is substantially the same as has been described in relation to the method 100 in Fig. 1. In step 215, the direction of a papillary tip of the heart valve leaflet is estimated. This allows the adaption of the 3D model in step 230 to extend the heart valve leaflet in the direction of the estimated direction of the papillary tip. The valve edge is pulled in the direction of the papillary tips by chordae, and utilising this information may aid in avoiding unrealistic and self-intersecting extensions of the leaflets. As the direction of the papillary tip is physiological and can be estimated, for instance, based on the 3D model or the series of 3D models, this provides a good basis to choose the direction of the extension. There is also some indication in literature of where the papillary tips are located on average in a heart valve leaflet, and this information may further be used in the estimation.

In some embodiments, the direction of the extension may instead be tangent to the edges of the original 3D model. This is less desirable, however, due to the possibility of intersections between different leaflets occurring which are not physiologically possible. It is, however, a simpler process.

In step 220, a predicted length of the heart valve leaflet is determined based on a series of 3D models of the heart valve leaflet, and wherein the series of 3D models of the heart valve leaflet comprises the 3D model of the heart valve leaflet. The series of 3D models of the heart valve leaflet may each relate to a frame of a 3D+t ultrasound scan of the leaflet. Based on the series of 3D models, of which the 3D model being adapted is a member, a predicted length of the leaflet may be determined. This may be determined, for instance, by finding a maximum length of the leaflet in the series; by averaging a length of the leaflet in the series; by averaging lengths of leaflets above a threshold length in the series; or by averaging lengths of leaflets corresponding to open valves in the series. For example, averaging a length of the leaflet in the series may comprise estimating a length of the leaflet for every 3D model in the series and then taking the average of all the estimated lengths. Alternatively, for example, only the estimated lengths of leaflets corresponding to open valves in the series may be considered, and these lengths may then be averaged to provide a predicted length of the heart valve leaflet. In other words, the (original) 3D model being adapted may be based on a frame of a 3D+t ultrasound scan of the heart valve leaflet, and the series of 3D models may be all or a subset of the frames of the same 3D+t ultrasound scan. The frames of the 3D+t ultrasound scan may also be referred to as consecutive ultrasound images.

Further, in step 220, determining the predicted length of the heart valve leaflet based on the series of 3D models comprises determining a maximum length of the heart valve leaflet based on the series of 3D models and taking the maximum length as the predicted length. By finding the maximum length among the series of 3D models, a length of the heart valve leaflet that is closer to or matches its full length can be found and used to adapt the 3D model of the heart valve leaflet by extending the leaflet to the determined maximum length. The maximum length of the heart valve leaflet based on the series of 3D models is likely to correspond to a 3D model representing the heart valve leaflet in an open state. This model may correspond to a frame of a 3D+t ultrasound scan of the heart valve leaflet in which the valve is open. When a heart valve is open, it is easier to see the full length of a heart valve leaflet in an ultrasound scan, and hence a 3D model generated based on a frame of the ultrasound scan in which the valve is open is likely to represent the full length of the heart valve leaflet. This maximum length can then be extracted from the series of 3D models and used to adapt the other 3D models, extending the leaflets to the determined maximum length.

In some embodiments, the lengths of the heart valve leaflets in the series of 3D models may be determined by using a cross-section of the valve from points on the orifice to points on the annulus.

In some embodiments, determining the maximum length of the heart valve leaflet based on the series of 3D models may comprise only analysing a diastolic frame section of each of the series of 3D models respectively.

In some embodiments determining a predicted length of the heart valve leaflet based on a series of 3D models of the heart valve leaflet may comprise providing the series of 3D models as inputs to a first neural network, the first neural network being trained to predict, for the series of 3D models of the heart valve leaflet, a predicted length of the heart valve leaflets.

There are several types of neural network, such as, for example, convolutional neural networks (CNNs) and recurrent neural networks (RNNs). In embodiments of the present invention, the first neural network may comprise CNN-based learning algorithms.

CNNs typically contain several layers, including a convolutional layer, a pooling layer, and a fully connected layer. The convolutional layer consists of a set of learnable filters and extracts features from the input. The pooling layer is a form of non-linear down-sampling, reducing the data size by combining the outputs of a plurality of neurons in one layer into a single neuron in the next layer. The fully connected layer connects each neuron in one layer to all the neurons in the next layer.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, weightings of the mathematical operation of each neuron may be modified until the error converges. Known methods of modifying a neural network include gradient descent, backpropagation algorithms and so on.

In step 230, the 3D model is adapted based on the predicted length and the estimated papillary tip direction to generate an adapted 3D model representing an extension of the heart valve leaflet to the predicted length and in the direction of the estimated papillary tip direction.

In some embodiments, all 3D models in the series of 3D models may be adapted based on the predicted length to represent an extension of each heart valve leaflet respectively to the predicted length. Optionally, the adaptation may be further based on the estimated papillary tip direction, and each 3D model in the series of 3D models may be adapted to extend the heart valve leaflet in the direction of the estimated papillary tip direction. In some embodiments, only the 3D models in the series of 3D models which have heart valve leaflet lengths below the predicted length are adapted.

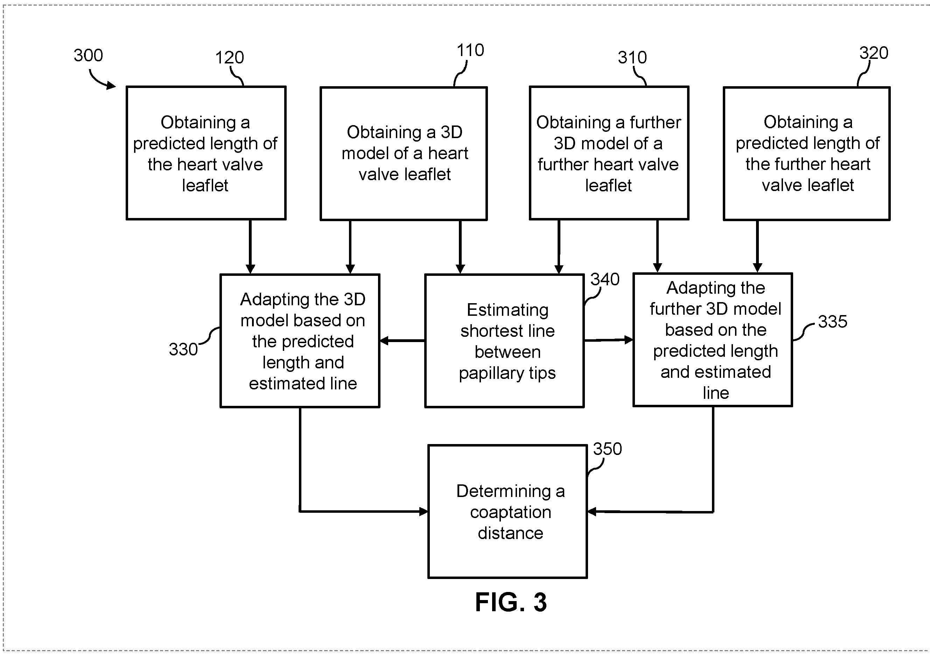

Referring now to Fig. 3, there is depicted a flow diagram of a method 300 for representing a predicted length of two heart valve leaflets respectively according to a proposed embodiment.

Steps 110 and 120 are substantially the same as has been described in relation to method 100 in Fig. 1. In step 310, a further 3D model representative of the geometry of the further heart valve leaflet is obtained. In step 320, a predicted length of the further heart valve leaflet is obtained. Steps 310 and 320 may be substantially the same as steps 110 and 120 described in relation to method 100 in Fig. 1, but regarding a different heart valve leaflet. For instance, the further heart valve leaflet may be in the same heart valve as the heart valve leaflet. Heart valves usually comprise two leaflets and so by modelling two heart valve leaflets, and adapting both, a fuller picture of the heart valve may be generated and utilised by a clinician.

In step 340, the shortest line between the papillary tips of the 3D model and the further 3D model is estimated respectively. This may then be used in steps 330 and 335 to adapt the 3D model and the further 3D model respectively based on their predicted lengths and the estimated shortest line. In other words, the extensions of the 3D model and the further 3D model respectively are in the direction of the estimated shortest line. This is not essential, however. The direction of the extensions of the 3D model and the further 3D model may be decided in any other suitable way. By extending in the direction of the shortest line, however, more accurate adapted 3D models of the entire heart valve may be generated and, optionally, used for further processing.

In some embodiments, either of step 330 or 335 may be skipped. In other words, after estimating the shortest line between the papillary tips of the 3D model and the further 3D model, only one of the 3D model or the further 3D model may be adapted. Step 350 may then be subsequently skipped too.

In step 350, a coaptation distance of the heart valve leaflet with the further heart valve leaflet is determined. Coaptation is where both leaflets meet and create a seal for some distance as both leaflets are orientated parallel and downwards. The coaptation distance of the heart valve leaflet with the further heart valve leaflet may then be determined based on the adapted 3D model and the further adapted 3D model. The coaptation distance is very important for clinicians to know. For instance, the coaptation distance is very valuable in the case of valve leakage and especially when clinicians are planning to perform a transcatheter procedure. The clinician may then be provided guidance on the amount of leaflet grasped.

This embodiment may be useful in the case of procedures dealing with heart valves with more than one heart valve leaflet. For instance, in the mitral valve, there is an anterior leaflet and a posterior leaflet. If the heart valve leaflet in one embodiment is the anterior leaflet of the mitral valve then the further heart valve leaflet will be the posterior leaflet. In the case of the tricuspid valve, however, which has three leaflets, there may be two further heart valve leaflets and the 3D models of all three leaflets may be adapted. In other words, the further heart valve leaflet may be understood as one of the other heart valve leaflets of the same heart valve as the original heart valve leaflet.

Referring now to Fig. 4, there is depicted an example illustration of an adapted 3D model 400 of a heart valve leaflet. The adapted 3D model 400 is based on a segmentation of 3D ultrasound scan data. The lighter volume 410 of the adapted 3D model 400 represents the original 3D model, and the darker volume 420 represents the extension of the heart valve leaflet.

For example, 3D ultrasound images of the left heart and mitral valve can be obtained with approximately 15 frames per heartbeat. Segmentation of the scan data can then provide a 3D geometrical model of the valve for each frame. The geometrical models may consist of a triangulation with nodes and triangles, such as the adapted 3D model 400. The connectivity and numbering of these triangulations are identical for every segmentation of any frame. One simple method is to use graph theory and to determine for each node on the orifice (leaflet edges), the shortest distance/route to the annulus (outside edge of the valve). Graph theory uses all edges within the triangulation to determine the shortest route. This means that with 15 frames, there are 15 valve length values per nodes on the orifice. The maximum of these 15 values may then be determined. In all frames where the maximum length is not reached, the leaflet may then be extended with the `missing length' (difference between the maximum length for that node and the length for that node within the current frame). This extension may be done in the direction of the papillary tips. This procedure can be repeated for every node along the orifice of the segmentation, thereby providing a varied predicted length with respect to a position along the orifice of the heart valve leaflet.

In some embodiments, adaptation of the 3D model may comprise use of a mechanical simulation such as a finite element (FE) simulation or FE-like simulation with contact-modelling. A model of the heart valve when the valve is an open state may be mechanically modelled and then the heart valve leaflet moved or forced against valve surfaces created from a series of 3D models. As the mechanical model of the heart valve will retain the length of the heart valve leaflet from when the valve was in an open state, the position of the heart valve leaflet when the valve is simulated as closed will effectively be physically correct. This information may then be used to adapt a 3D model of the heart valve leaflet to extend the leaflet to its predicted length.

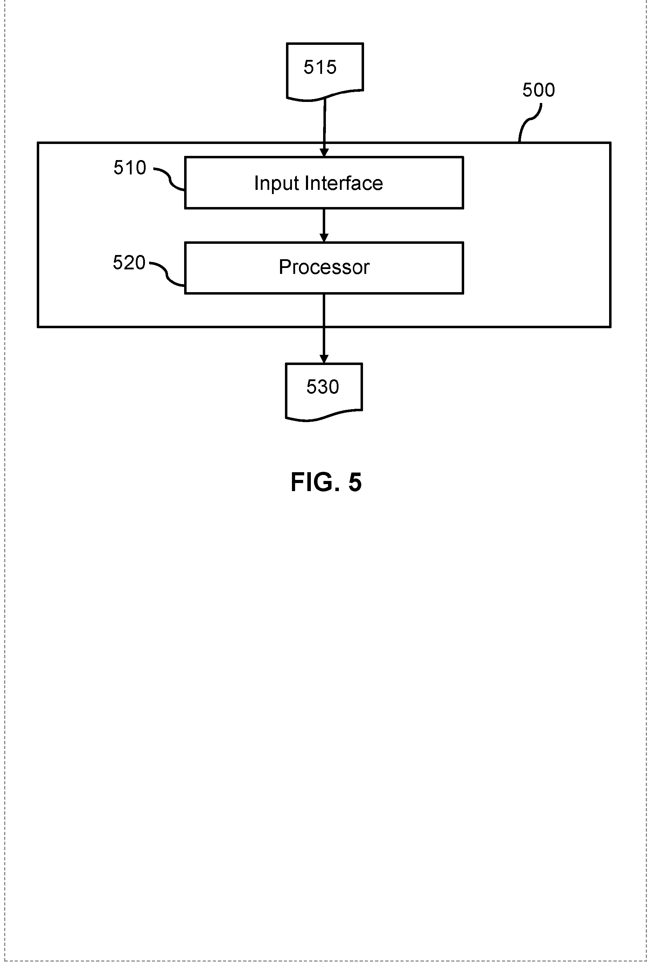

Referring now to Fig. 5, there is depicted a system 500 for representing a predicted length of a heart valve leaflet according to a proposed embodiment. The system 500 comprises an input interface 510 and a processor 520.

The system 500 is configured to represent a predicted length of a heart valve leaflet by processing inputs 515. The inputs 515 comprise a 3D model representative of the geometry of a heart valve leaflet and a predicted length of the heart valve leaflet. The input interface 510 obtains the inputs 515 and the processor 520 is then configured to adapt the 3D model based on the predicted length to generate an output 530. The output 530 comprises an adapted 3D model representing an extension of the heart valve leaflet to the predicted length. In some embodiments, the processor 520 may comprise a first neural network.

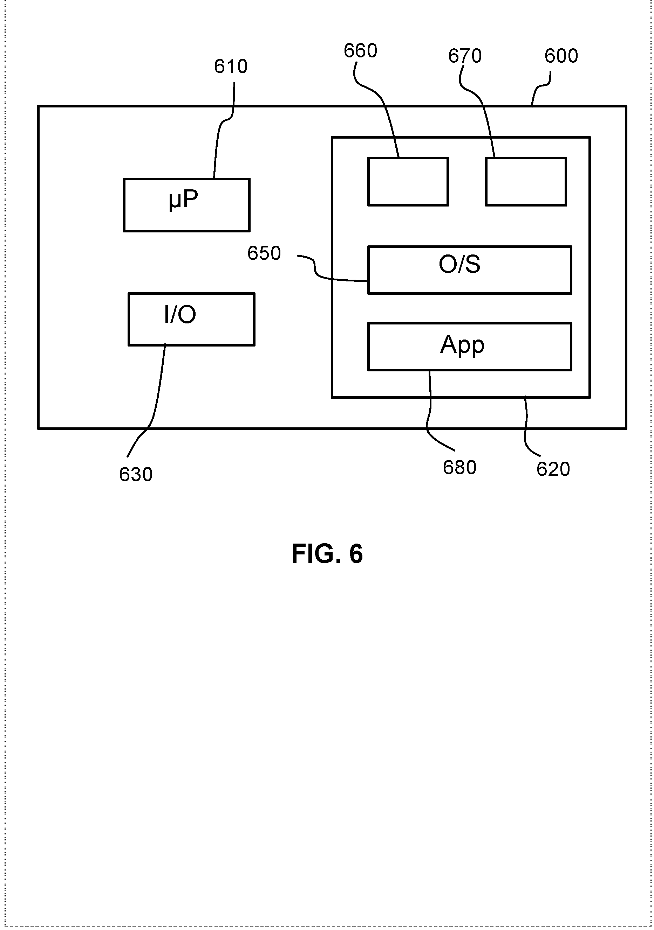

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-3, and the system of Fig. 5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 5 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method for representing a predicted length of a heart valve leaflet:
obtaining a 3D model representative of the geometry of a heart valve leaflet;
obtaining a predicted length of the heart valve leaflet; and
adapting the 3D model based on the predicted length to generate an adapted 3D model representing an extension of the heart valve leaflet to the predicted length.

2. The method of claim 1, wherein obtaining a predicted length of the heart valve leaflet comprises:
determining a predicted length of the heart valve leaflet based on a series of 3D models of the heart valve leaflet, and wherein the series of 3D models of the heart valve leaflet comprises the 3D model of the heart valve leaflet.

3. The method of claim 2, wherein determining a predicted length of the heart valve leaflet based on the series of 3D models comprises determining a maximum length of the heart valve leaflet based on the series of 3D models and taking the maximum length as the predicted length.

4. The method of any prior claim, wherein the predicted length of the heart valve leaflet comprises a plurality of values describing variation of the length of the heart valve leaflet with respect to a position along a tip of the heart valve leaflet.

5. The method of any prior claim, wherein the extension is indicated visually in the adapted 3D model.

6. The method of claim 5, wherein the visual indication is a transparent overlay over the 3D model.

7. The method of claim 6, wherein the transparent overlay is of a different colour to the 3D model.

8. The method of any prior claim, wherein the 3D model is based on at least one 3D ultrasound image of the heart valve leaflet.

9. The method of any prior claim, wherein the method further comprises estimating the direction of a papillary tip of the heart valve leaflet and wherein the extension of the heart valve leaflet is in the direction of the estimated direction of the papillary tip.

10. The method of any of claims 1 to 9, wherein the method further comprises:
obtaining a further 3D model representative of the geometry of a further heart valve leaflet;
obtaining a predicted length of the further heart valve leaflet; and
adapting the further 3D model based on the predicted length of the further heart valve leaflet to generate a further adapted 3D model representing an extension of the further heart valve leaflet to the predicted length of the further heart valve leaflet.

11. The method of claim 10, wherein the method further comprises estimating the shortest line between the papillary tips of the 3D model and the further 3D model respectively, and wherein the extensions of the heart valve leaflet and the further heart valve leaflet respectively are in the direction of the estimated shortest line.

12. The method of claim 10 or 11, wherein the method further comprises determining a coaptation distance of the heart valve leaflet with the further heart valve leaflet.

13. The method of any prior claim, wherein the 3D model is based on segmentation of 3D ultrasound scan data.

14. A computer program comprising code means for implementing the method of any preceding claim when said program is run on a processing system.

15. A system for representing a predicted length of a heart valve leaflet, the system comprising:
an input interface configured to:
obtain a 3D model representative of the geometry of a heart valve leaflet; and
obtain a predicted length of the heart valve leaflet; and
a processor configured to:
adapt the 3D model based on the predicted length to generate an adapted 3D model representing an extension of the heart valve leaflet to the predicted length.
